# EUROPÄISCHE PATENTANMELDUNG

(11) **EP 3 466 429 A1**
(43) Veröffentlichungstag der Anmeldung: **10.04.2019**
(21) Anmeldenummer: 17195525.5
(22) Anmeldetag: 09.10.2017
(51) Int. Cl.: A61K 31/517, A23K 50/00, A23K 50/80

(54) **MITTEL ZUR LEISTUNGSSTEIGERUNG VON FISCHEN UND KREBSTIEREN**

(71) Anmelder: Phytobiotics Futterzusatzstoffe GmbH, 65343 Eltville (DE)
(72) Erfinder: ROTH, Hermann, 65346 Eltville (DE)
(74) Vertreter: Richardt Patentanwälte PartG mbB

(57) **Zusammenfassung**

Die Erfindung betrifft eine Tiernahrung oder Tiernahrungsergänzungsmittel als Leistungsförderer für Fische und Krebstiere, welche Febrifugin oder ein Febrifuginderivat enthält.

## Beschreibung

### Technisches Gebiet

Die Erfindung bezieht sich auf Tiernahrung und einen Tiernahrungszusatz als Leistungsförderer für Fische und Krebstiere.

### Stand der Technik

Derzeit werden in vielen Ländern der Erde Antibiotika in niedriger Dosierung zur Leistungsstimulierung und Gesundheitsprophylaxe bei Fischen und Krebstieren eingesetzt. Dazu zählen die USA, China, Brasilien, Russland, Mexico, Australien, Japan, Thailand, Vietnam. Daran hat auch das Verbot der Verfütterung von Antibiotika zur Leistungsverbesserung an Nutztiere von 2006 nichts Wesentliches geändert.

Speziell die Fischzucht in großen Netzen auf offener See (zum Beispiel Lachs) oder in Teichen (z, b. Karpfen) und die Mast von Shrimps in flachen Lagunen leidet unter hohem Besatzdruck durch sehr viele Tiere je Kubikmeter Wasser. Durch die intensive Fütterung mit industriellem Fertigfutter gelangt auch ein nicht unerheblicher Anteil des Futters direkt in das Wasser und den Teichboden. Durch den Futtereintrag wird dort eine hohe Nährstoffdichte aufgebaut, die ein idealer Nährboden ist für Bakterien und Parasiten sind, die der Gesundheit von Fischen und Krebstieren schaden. Außerdem sinkt durch den Fäulnisdruck des Futterabbaus der Sauerstoffgehalt in den Gewässern ab und anaerobe Bedingungen entstehen, die ein weiteres Ansteigen der bakteriellen Belastung des Wassers besonders mit anaeroben Keimen wie Clostridien mit folgender Zunahme der Infektionen der Tiere bewirkt.

Daher werden derzeit verschiedenste Antibiotika im Futter verwendet um dieser bakteriellen Last zu begegnen. Neben Antibiotika kommen auch Herbizide, Pestizide, Desinfektionsmittel und Arzneimittel zum Einsatz. Zum Beispiel wurde der Einsatz des Antibiotikums Oxytetracyclin bei der Zucht bzw. Haltung von Garnelen, Tilapia, Zuchtlachs und Zuchtforellen, der Einsatz von 4-Epi-Oxytetracyclin bei Zuchtlachs, der Einsatz von Sulfadimethoxin bei Zuchtgarnelen, der Einsatz von Ormetoprim bei Zuchtlachs sowie der Einsatz von Virginiamycin bei Zuchtlachs nachgewiesen. Die wichtigsten in der Fischzucht verwendeten Antibiotika sind insbesondere das Penicillin, das Lincomycin und die Tetrazykline, das Chloramphenicol sowie das Oxitetrazyklin und das Chlortetrazyklin, die allesamt wichtige Antibiotika in der Humanmedizin sind.

### Technisches Problem und grundlegende Lösungen

Der Einsatz der oben genannten Substanzen bei der Fisch-und Shrimpzucht hat verschiedene und teils schwere Nachteile für die Gesundheit von Mensch und Umwelt: zum einen belasten die Rückstände der oben genannten Substanzen, insbesondere Antibiotika, das Wasser der Teiche, Fjorde und Meere und auch das Fleisch der Fische und Krebstiere und gelangen letztlich über die Nahrungskette auch in den menschlichen Organismus. In der Zucht von Lachsen, von Shrimp und anderen wirtschaftlich wichtigen Fisch- und Krebstierarten werden dem Futter einzelne Antibiotika z. B. aus der Gruppe der Makrolide, Breitbandantibiotika oder sogar Cocktails aus mehreren Antibiotika wie z. B. Beta Lactame und Tetrazykline zur Prophylaxe einer Infektion und zur Sicherung der Aufzuchtleistung zugesetzt. Der Einsatz von Breitbandantibiotika wie z.B. Chloramphenicol und von Kombinationen mehrerer Antibiotika fördert die Entwicklung von multiresistenten Keimen und ist daher besonders problematisch. Der Einsatz von Antibiotika in Fisch- und Shrimpfarmen ist z.B. mitverantwortlich für das vermehrte Auftreten von multiresistenten Staphylokokkus Aureus Keimen (MRSA) im Trinkwasser und fließenden Gewässern, (siehe z.B. "Multiresistente Erreger: «Super-Keime» aus Indien, NZZ, 19.07.2016), die gegen Reserveantibiotika wie Colistin multiple Resistenzen erworben haben. Multiresistente Keime stellen eine tödliche Bedrohung für den Menschen dar, insbesondere für Patienten mit geschwächtem Immunsystem, die auf die Wirksamkeit von Antibiotika angewiesen sind um eine Infektion zu überleben.

Ein weiterer Nachteil von rein antibakteriell wirkenden Leistungssteigerern ist, dass sie nicht gegen andere Faktoren, die ebenfalls das Wachstum von Krebsen und Fischen beeinträchtigen, wirken. Viele der vorgenannten Antibiotika wirken ausschließlich gegen Bakterien und sind wirkungslos gegen Leistungsausfälle aufgrund viraler Erkrankungen oder aufgrund sonstiger Faktoren, die sich negativ auf die Gesundheit oder den Verdauungstrakt von Fischen oder Krebstieren auswirken. Der Einsatz von selektiv gegen Bakterien gerichteten Antibiotika ist daher häufig nicht nur schädlich für Mensch und Umwelt, sondern auch wirkungslos. Der Einsatz antibakterieller Mittel bei der Produktion von Fischen und Krebstieren in Aquakultur bzw. Zuchtnetzen erhöht daher oftmals nur die Kosten, ohne den Ertrag an Fisch bzw. Schrimps zu erhöhen.

Der Erfindung liegt demgemäß die Aufgabe zugrunde, weitere bzw. alternative Tiernahrungsmittel und Tiernahrungsmittelzusatzstoffe zur Leistungssteigerung bei Fischen und Krebstieren zur Verfügung zu stellen die ein breiteres Wirkungsspektrum anbieten und einen Lösungsansatz für generelle Probleme der Fischzucht bieten.

In einem Aspekt betrifft die Erfindung eine Tiernahrung oder Tiernahrungsergänzungsmittel als Leistungsförderer für Fische und Krebstiere, das Febrifugin oder ein Febrifuginderivat enthält.

Dies kann vorteilhaft sein, da Febrifugin Fische und Krebstiere nicht nur vor bakteriellen Infektionen, sondern auch vor Viruserkrankungen und Stress und dessen Folgeerkrankungen wirksam schützt, ohne die vorbenannten Probleme (Resistenzbildung gegen Reserveantibiotika, multiresistente Keime) mit sich zu bringen.

Die Leistung bzw. Überlebens- und Wachstumsrate von Fischen und Krebstieren wird in erheblichem Maße durch virusbedingte Erkrankung und Stress (Hitze, zu dichter Besatz, schlechte Wasserqualität, geringe Sauerstoffkonzentration, etc.) verursacht. Viren sind für eine Vielzahl schwerer und hoch ansteckender Krankheiten bei Fischen und Krebstieren verantwortlich. Stress während der Haltung und Mast führt oftmals zu subklinischen entzündlichen Prozessen, die das Tier schwächen und anfällig für Krankheitserreger machen. Die durch Stress induzierten entzündlichen Prozesse z. B. im Darm, der Leber oder der Pankreas erhöhen wiederum die Anfälligkeit für Infektionserkrankungen einschließlich weiterer viraler Infektionen und/oder führen zu einer schlechten Futterverwertung und damit zu erhöhten Produktionskosten. Es wurde beobachtet, dass Febrifugin ein wirksames Mittel zur Prophylaxe und Behandlung nicht-bakteriell induzierter Entzündungen der Verdauungsorgane, insb. virusbedingter Entzündungen, und/oder auch von stressbedingtem Leistungsabfall ist.

Somit wird ein Leistungsförderer bereitgestellt, der nicht die bekannten Nachteile klassischer antibakterieller Mittel mit sich bringt, dafür aber ein breiteres Wirkspektrum bezüglich der Leistungssteigerung von Fischen und Krebstieren aufweist. Febrifuginhaltige Futtermittel stellen daher eine verbesserte Alternative zu der Verwendung klassischer Antibiotika in der Fisch- und Schrimp-Zucht dar. Febrifugin ist nach kurzer Zeit rückstandslos biologisch abbaubar und fördert die Entwicklung bzw. Verbreitung von Antibiotikaresistenzen nicht.

Die Verabreichung von Febrifugin kann vorteilhaft sein, da Febrifugin subklinische und klinische Entzündungsprozesse im Verdauungstrakt von Fischen und Krebstieren reduziert. Es scheint, dass mit Febrifugin behandelte Tiere weniger Energie für Heilungsprozesse von Entzündungen verwenden müssen und somit eine bessere Verdauung des Futters, eine bessere Futterausnutzung, eine höhere Eiweißausnutzung, und eine stärkere Immunantwort auf verschiedenste Erreger aufweisen.

Nach Ausführungsformen ist die Tiernahrung bzw. das Tiernahrungsergänzungsmittel ein Mittel zur Vorbeugung und Behandlung von mikrobiell- und/oder nicht-mikrobiell induzierten Entzündungen der Verdauungsorgane und/oder wird als solches verwendet.

Der Ausdruck "mikrobiellen Ursprungs" bzw. "mikrobiell-induziert" bedeutet "durch Bakterien, Viren, Pilze und/oder Protisten verursacht". Viren gelten zwar nicht als Lebewesen, werden in der Praxis aber i.d.R. den Mikroben zugerechnet. Unabhängig von der Frage der Zuordnung von Viren unter "belebte" oder "unbelebte" Materie wird nach Ausführungsformen der Erfindung febrifuginhaltiges Futter bzw. Nahrungsergänzungsmittel zur Prophylaxe bzw. Behandlung von virus-induzierten Erkrankungen, insbesondere virus-induzierten Entzündungen des Verdauungstrakts, verwendet.

Entsprechend bedeutet "nicht mikrobiell verursacht", dass die vorgenannten Erreger nicht der Ursprung der Erkrankung bzw. Entzündung sind, sondern z.B. Futter oder Futterbestandteile, das den Verdauungstrakt mechanisch oder chemisch reizen und zu Entzündungen führen, oder "durch Stress verursacht".

Unter "Stress" werden hier Umweltfaktoren während der Haltung von Fischen oder Krebstieren verstanden, die zu einer negativen physiologischen Reaktion, insb.

Leistungsabfall, verringertes Wachstum und/oder einer Schwächung des Immunsystems führen. Zu diesen Faktoren gehören insbesondere hohe Wassertemperaturen, dichter Besatz des Beckens, und ein geringer Sauerstoffgehalt. In der Praxis der Tierzucht und insbesondere in der Zucht von Fischen und Shrimp die auf engstem Raum erfolgt, ist der Stress und Infektionsdruck erheblich. Ausfälle bis zu 80 % der Jungtiere sind nicht ungewöhnlich.

Febrifugin und seine Derivate kann also nach Ausführungsformen der Erfindung als "Breitbandprotektiv" bzw. "Breitbandmittel" gegen (subklinische und klinische) Entzündungen des Verdauungstrakts und der Pankreas von Fischen und Krebstieren eingesetzt werden. Insbesondere kann die Tiernahrung bzw. das Tiernahrungsergänzungsmittel ein Mittel zur Vorbeugung und Behandlung von virus-induzierten Entzündungen der Verdauungsorgane sein und/oder als solches verwendet werden.

Dies kann vorteilhaft sein, da die wirtschaftlich wesentlichsten Erkrankungen in der industriellen Aquakultur virale Erkrankungen sind. Einige der wichtigsten viralen Erkrankungen sind im Folgenden genannt. Nach Ausführungsformen wird febrifuginhaltiges Tierfutter nach einer der hier beschriebenen Ausführungsformen zur Prophylaxe oder Behandlung einer oder mehrerer der folgenden viralen Erkrankungen von Krebstieren oder Fischen verabreicht:
White spot syndrome (WSS): eine Viruserkrankung von Garnelen. Akut infizierte Garnelen zeigen eine rasche Verringerung der Futteraufnahme. Die Krankheit ist sehr ansteckend und mit einer hohen Sterblichkeitsrate verbunden.

Infectious hypodermal and hematopoietic necrosis (IHHN): eine Viruserkrankung von Garnelen. Infizierte Garnelen zeigen oft reduzierten Futteraufnahme, Kannibalismus und langsames Schwimmen auf der Wasseroberfläche, niedrige Brutrate und hohe Sterblichkeit von Larven und Postlarven von bis zu 90 Prozent.

Yellowhead disease (YHD): eine Viruserkrankung von Garnelen, insbesondere der Riesen-Tiger-Garnelen (Penaeus monodon). Die Krankheit ist ansteckend mit hoher Sterblichkeitsrate.

Taura syndrome: eine Viruserkrankung kultivierter Garnelen im Stadium Postlarven (PL-12 und älter) und jugendlichen P. vannamei Garnelen. Es ist also eine Krankheit einer frühen Entwicklungsstufe der Garnelen, die in der Regel innerhalb von etwa 14 bis 40 Tagen in der Postlarvenphase auftritt. Die Mortalitätsrate ist hoch (kumulative Verluste von 80 bis 95%).

Disease of Penaeid Shrimp: eine durch das Virus "Monodon Baculovirus (MBV)" verursachte Garnelenkrankheit. Sie führt zur Verringerung der Futteraufnahme und der Wachstumsraten und erhöhte Oberflächen- und Kiemenverschmutzung mit verschiedenen epibiotischen und epikommensalen Organismen.

Hepatopancreatic Parvo-like virus (HPV) Krankheit: eine Viruserkrankung von Garnelen, die Leber und Bauchspeicheldrüse beschädigt, was zu einem langsamen Wachstum oder Tod führen kann.

Ansteckende Blutarmut der Lachse (Infectious Salmon Anemia, ISA): eine hochansteckende virale Erkrankung, die durch das Virus der infektiösen Lachsanämie (engl. Infectious Salmon Anemia Virus, ISAV) verursacht wird. Die Übertragung erfolgt durch direkten Kontakt mit Virusträgern oder durch mit deren Ausscheidungen kontaminiertes Wasser. Auch Fischläuse (Caligulus elongatus und Lepeophterius salmonis) können die Krankheit übertragen. Die Krankheit führt zu Lethargie, Appetitverlust, Luftschnappen an der Wasseroberfläche, Blässe von Kiemen und Herz, Flüssigkeit in der Körperhöhle, dunkle Leber, Hämorrhagien in inneren Organen.

Infectious haematopoietic necrosis (IHN): eine infektiöse virale Erkrankung von Lachs und Forelle. Die Krankheit hat die höchste ökonomische Bedeutung für Süßwasserfarmen, aber auch bei Pazifischem und Atlantischem Lachs (Salmo salar L.) sowohl im Frisch- als auch im Meerwasser. Die meisten, wenn nicht alle salmoniden Spezies sind anfällig für das Virus, insbesondere in frühen Lebensstadien. Die Infektion ist oft tödlich und die Sterblichkeit der Jungtiere kann 100% betragen.

Virales hämorrhagisches Septikämievirus (VHSV): eine äußerst ernste, tödliche infektiöse Fischkrankheit, die durch Viren verursacht wird. Betroffen sind über 50 Arten von Süßwasser- und Meeresfischen in mehreren Teilen der nördlichen Hemisphäre. Infizierte Fische zeigen im Körper weit verbreitete Blutungen an der Körperoberfläche (Augen, Haut und Flossen) und in den inneren Organen (Schwimmblase, Darm, Niere usw.). Wegen der Blutungen, Kiemen und Leber könnte blass erscheinen.

Bauchspeicheldrüsenkrankheit (PD): Krankheit des gezüchtetem Atlantischen Lachses, die durch das Salmon Pancreas Disease Virus (SPDV), das zur Gattung Alphaviridae gehört, verursacht wird. Zu den klassischen Sympthomen gehören träges Schwimmen und eine Erhöhung der Anzahl der Fäkalien in den betroffenen Käfigen. Sterblichkeitsraten von 10 bis 50% des Smolts eines Jahres sind normal.

Wie man anhand der Aufstellung erkennen kann, sind die meisten wirtschaftlich relevanten Erkrankungen bei kommerziell gemästeten Fischen und Krebstieren auf Viren zurück zu führen. Bakterielle Erkrankungen spielen ursächlich also kaum eine Rolle, sondern treten allenfalls als Folge- oder Begleiterkrankung auf wenn die Tiere bereits durch die Viruserkrankung geschwächt sind. Die Verwendung von febrifuginhaltigem Futter bei der Fisch- und Krebstiermast hat also den großen Vorteil gegenüber rein antibakteriell wirkenden Antibiotika, auch gegen pathogene Viren wirksam zu sein und damit einen vorbeugenden, früheren und somit besseren Schutz vor den in diesem Kontext wichtigsten Krankheiten zu bieten als dies Antibiotika leisten können.

Nach Ausführungsformen ist die Tiernahrung bzw. das Tiernahrungsergänzungsmittel ein Mittel zur Vorbeugung und Behandlung von Leistungsminderung durch Stress und/oder wird als solches verwendet.

Nach Ausführungsformen enthält die Tiernahrung oder das Tiernahrungsergänzungsmittel Pflanzenmaterial der Dichroa febrifuga oder eines Extraktes aus dieser Pflanze. Das Febrifugin oder dessen Derivat ist Bestandteil des Pflanzenmaterials oder des Extrakts. Insbesondere kann das Pflanzenmaterial aus Wurzelmaterial der Dichroa febrifuga bestehen oder das Wurzelmaterial beinhalten, da die Wurzeln einen besonders hohen Wirkstoffanteil enthalten.

Ein Febrifuginderivat kann z.B. in einem Salz (z.B. Sulfat) von Febrifugin bestehen. Die Zumischung von Febrifugin zum Futter in Form eines Pflanzenextrakts kann vorteilhaft sein, da somit ein in der Herstellung kostengünstiges Mittel zur Leistungssteigerung bei Fischen und Krebstieren zur Verfügung steht. Febrifugin ist biologisch abbaubar und kann als Naturprodukt (Pflanzenextrakt) in vergleichsweise großen Mengen gewonnen werden. Dies entspricht auch den Wünschen des Konsumenten nach einer naturnahen, umweltschonenden und im Hinblick auf die Entwicklung multiresistenter Erreger unbedenklichen Lebensmittelproduktion.

Febrifugin kommt beispielsweise in der Wurzel der Pflanze Dichroa febrifuga vor. Die Pflanze Dichroa febrifuga gehört zur Familie der Hortensiengewächse (Hydrangeaceae) und wird in China schon seit etwa 2000 Jahren als Fieber- und Malariamittel zur Behandlung von Menschen eingesetzt. Unbekannt war aber bisher die leistungsfördernde Wirkung von Febrifugin und febrifuginhaltigem Pflanzenmaterial auf Fische und Krebstiere. Als Anti-Malariamittel bei Fischen bzw. Krebstieren kam Febrifugin nicht in Betracht, da diese nicht an Malaria erkranken können. Auch dass Febrifugin als Futtermittelbestandteil in wässrigem Milieu überhaupt eine physiologische Wirk zeigt ist nicht selbstverständlich, da manche Stoffe, die als Futtermittelzusatz bei der Rinder- und Schweinemast eingesetzt werden, im wässrigen Milieu nicht stabil sind oder so schnell in Lösung gehen dass sie als Zusatz für manche Futtersorten nicht in Frage kommen.

Der für Ausführungsformen beschriebene pflanzliche Febrifuginextrakt kann beispielsweise wie nachfolgend beschrieben hergestellt werden: Die getrockneten und pulverisierten Wurzeln der Pflanze Dichroa febrifuga wurden einer zweifachen hydroalkoholischen Extraktion (70% Ethanol) unterzogen. Das Lösungsmittel wurde mittels Vakuumdestillation bei ca. 55-60°C entfernt. Dabei wurde ein konzentrierter, Extrakt gewonnen. Dieser Extrakt wurde mit Maltodextrin versetzt, der resultierende flüssige Extrakt bei ca. 80-90°C vakuumgetrocknet und anschließend gemahlen. Das finale getrocknete Endprodukt kann dann beispielsweise 6 bis 8 % des Wirkstoffs Febrifugin enthalten oder je nach höherer Aufreinigung auch mehr.

Nach Ausführungsformen besteht die Tiernahrung für die Fischzucht und die Shrimpfütterung zu mindestens aus ca. 10 % einer Vormischung in der Mineralien, Vitamine, Enzyme, (optional auch Antibiotika), Aminosäuren und Farbstoffe usw. enthalten. Die Tiernahrung besteht ferner zu 10 bis 40 % aus diversen Fischmehlen oder Fischabfallmehlen (z.B. aus der Fischverarbeitung für die menschliche Ernährung) und zu 30 bis 50 % aus Mais. Weitere Bestandteile mit 10 bis 20 % können Mehl von Tintenfischen oder Tiermehle von Landtieren wie Hühnern, insbesondere Innereien von geschlachteten Hühnern oder Schweinen, sog. Tierkörpermehl, sein.

Die kostengünstige Rohkomponente Mais bzw. Maismehl hat häufig einen hohen Gehalt an Omega6-Fettsäuren, die zu Entzündungen im Verdauungstrakt von Fischen und Shrimps führen können. Es wurde beobachtet, dass dieser negative, leistungsmindernde Effekt insb. der Maiskomponente (bzw. sonstiger Futterkomponenten mit hohem Omega-6-Gehalt) durch Febrifugin kompensiert werden kann.

Nach Ausführungsformen enthält die Tiernahrung oder das Tiernahrungsergänzungsmittel zumindest ein Isochinolinalkaloid oder dessen Derivat, z.B. ein Salz wie etwa ein Sulfatsalz oder Chloridsalz. Beispielsweise kann das zumindest eine Isochinolinalkaloid in Form von Pflanzenmaterial der Papaveraceae oder als Extrakt davon oder in Form der isolierten Alkaloide oder Alkaloidgemische oder synthetische Analoge vorliegen. Das zumindest eine Isochinolinalkaloid kann insbesondere ein Benzophenanthridinalkaloid, vorzugsweise ausgewählt aus der Gruppe bestehend aus Sanguinarin und/oder Chelerythrin und deren Salzen, sein.

Das Isochinolinalkaloid liegt nach manchen Ausführungsformen in einer Konzentration von über 50 µg, vorzugsweise über 100 µg pro kg Tiernahrung vor. Beispielsweise liegt das Isochinolinalkaloid in einer Konzentration von 300 µg - 1 mg Isochinolinalkaloid pro kg Tiernahrung vor.

Dies kann vorteilhaft sein, da beobachtet wurde, dass eine Kombination der Leistungssteigerer Febrifugin und z.B. Sanguinarin und/oder Chelerythrin eine synergistisch gesteigerte Leistungssteigerung bewirkt, ohne dass die beiden Substanzen sich in ihrer Wirkung gegenseitig blockieren oder unerwünschte Nebenwirkungen zu beobachten waren.

Nach Ausführungsformen enthält die Tiernahrung Febrifugin einer Konzentration von über 50 µg Febrifugin/kg Tiernahrung.

Vorzugsweise liegt das Febrifugin in der Tiernahrung in einer Konzentration von 100 µg -17 mg/kg Tiernahrung vor. Insbesondere kann das Febrifugin in der Tiernahrung in einer Konzentration im Bereich von 1-10 mg/kg Tiernahrung, vorzugsweise im Bereich von 1-4 mg/kg Tiernahrung vorliegen.

Nach Ausführungsformen ist das Tiernahrungsergänzungsmittel eine Vormischung oder ein Konzentrat zur Erzeugung der Tiernahrung nach einer der hier beschriebenen Ausführungsformen. Beispielsweise können Dosierempfehlungen auf der Verpackung des Tiernahrungsergänzungsmittels so lauten, dass bei empfehlungsgemäßer Dosierung eine Tiernahrung nach den hier beschriebenen Ausführungsformen beim Endabnehmer erzeugt wird.

In einem weiteren Aspekt betrifft die Erfindung Febrifugin, ein Febrifuginderivat oder ein febrifuginhaltiges Pflanzenextrakt zur Herstellung einer Tiernahrung oder eines Tiernahrungsergänzungsmittels als Leistungsförderer für Fische und/oder Krebstiere nach einer der hier beschriebenen Ausführungsformen.

In einem weiteren Aspekt betrifft die Erfindung ein Verfahren zur Leistungsförderung bei Fischen und Krebstieren. Das Verfahren beinhaltet eine Bereitstellung einer Tiernahrung nach einer der hier beschriebenen Ausführungsformen. Die Bereitstellung kann insbesondere das Verfüttern der Tiernahrung bedeuten und z.B. in einem Befüllen eines Futtertrogs oder eines Futterautomaten mit febrifuginhaltigem Fischfutter (z.B. Pellets oder Sticks) oder Shrimpfutter oder sonstiger Formen der Bereitstellung von erfindungsgemäßem Futter an Fische oder Krebstiere bestehen. Die febrifuginhaltige Tiernahrung ist vorzugsweise fest und so beschaffen, dass das enthaltene Febrifugin sich nicht im Wasser löst oder aus dem Futter herausdiffudiert bevor das Futter typischerweise gefressen ist. Die Zusammensetzung und Darreichungsform kann in Abhängigkeit von der Fisch- bzw. Krebstierart, dem Alter der Tiere und dem Verfütterungsort (Fjord, See, Meer, etc.) variieren.

Nach Ausführungsformen wird die Leistungssteigerung durch Vorbeugung und Behandlung von mikrobiell- und/oder nicht-mikrobiell induzierten Darmentzündungen, insbesondere von virusbedingten Darmentzündungen, bewirkt.

Nach weiteren Ausführungsformen wird die Leistungssteigerung durch Vorbeugung und Behandlung von Stress bewirkt. Sowohl die entzündungshemmende Wirkung als auch die stressvorbeugende Wirkung können kombiniert zusammenwirken und Gesundheit und Wachstum von Fischen und Krebstieren fördern.

Nach Ausführungsformen wird das Tierfutter so bereitgestellt, dass die durch dieses verabreichte Menge an Febrifugin oder Febrifuginderivat zwischen 10 µg und 3000 µg, bevorzugt zwischen 20 µg und 500 µg pro kg Lebendgewicht Fisch oder Krebstier pro Tag liegt. Je nach Fressverhalten einer Tierart kann die Febrifuginkonzentration und/oder die Futtermenge entsprechend angepasst werden.

Nach Ausführungsformen beinhaltet das Verfahren ferner die Verabreichung zumindest eines Isochinolinalkaloides als weiteren Tierfutterbestandteil an die Fische oder Krebstiere. Die verabreichte Menge an dem zumindest einen Isochinolinalkaloid liegt bei über 1 µg pro kg Lebendgewicht Fisch oder Krebstier pro Tag, vorzugsweise im Bereich von 10 µg - 200 µg pro kg Lebendgewicht pro Tag.

Nach Ausführungsformen kann die Tiernahrung oder das Tränkwasser oder das Tiernahrungsergänzungsmittel zusätzlich ein oder mehrere Antibiotika und Arzneimittel beinhalten. Zusätzlich oder alternativ dazu kann die Tiernahrung oder das Tiernahrungsergänzungsmittel weitere Zusatzstoffe wie Vitamine, Spurenelemente, Aminosäuren, Kräuter, Geschmacksstoffe etc. beinhalten. Das Isochinolinalkaloid kann der Tiernahrung oder dem Tiernahrungsergänzungsmittel in Form eines weiteren Pflanzenextrakts zugegeben werden, welcher z.B. Alkaloide wie Sanguinarin und/oder Chelerythrin enthält.

### Kurzbeschreibung der Figuren

Einige Tests die die Wirksamkeit von Febrifugin zum Zwecke der Leistungssteigerung bei Fischen und Krebstieren belegen sind in den Figuren veranschaulicht. Darin zeigen:
- Figur 1: zeigt histologische Schnitte und Ausmaß der Fett-Vakuolisierung der Hepatopankreas in Shrimp, Penaeus Indicus.
- Figur 2: zeigt ein Schema des Verdauungstrakts von Shrimps.

### Ausführliche Beschreibung

Im Folgenden wird die Wirksamkeit von Febrifugin zur Leistungssteigerung und als Mittel gegen mikrobiell wie nicht-mikrobiell induzierte Entzündungen sowie Stress anhand einiger experimenteller Daten veranschaulicht.

### Versuche mit Krebstieren (Garnelen, Shrimp):

**Versuch 1:** Für diesen in Equador durchgeführten Versuch wurden 8 Replikationsteiche für Shrimp der Rasse P. Vannamei pro Versuchsgruppe (Febrifugin bzw. Kontrolle) verwendet. Jeder Teich war etwa 1 Hektar (10.000 m²) groß. In 8 "Kontrollteichen" wurde 141 Tage lang Standardfutter mit dem Antibiotikum Oxitetrazyklin verabreicht, in den 8 "Behandlungsteichen" dagegen eine phytobiotische Ergänzung aus dem Extrakt der Dichroa Febrifuga. Der Extrakt wurde in einer Menge von 25 mg/kg Futter verabreicht und hatte einen Febrifuginanteil von ca. 6,5%. Der Febrifuginanteil lag damit bei etwa 1,6 mg Febrifugin pro kg Futter.

| **BEHANDLUNG** | **EXTRAKT DER DICHROA FEBRIFUGA 25 MG EXTRAKT/KG FUTTER** | **KONTROLLE OXITETRAZY KLIN 100 MG/KG** | **UNTERSCHIED (%)** | **P WERTE** | |
|---|---|---|---|---|---|
| **Überlebensrate [%]** | 54,5 ± 7,1* | 43,6 ± 10,6* | + 20 | 0,0304 | |
| **Gewicht [g]** | 17,2 ± 1,5* | 16,0 ± 2,9* | +8 | 0,4395 | |
| **Ertrag [kg/ha]** | 755 ± 78* | 576 ± 90* | +31 | 0,0004 | |
| **kg Futter/Teich [1ha]** | 1423 ± 109* | 1228 ± 126* | +16 | 0,0018 | |
| **FCR** | 1,88 ± 0,21 | 2,13 ± 0,33 | - 11 | 0,7130 | |
| **Zuwachs [g/Woche]** | 1,075 ± 0,075* | 0,98 ± 0,137* | +10 | 0,3876 | |
| **CV [%]** | 9 | 15 | -40,0 | - | |

| | | | | | |
|---|---|---|---|---|---|
| *: *ein signifikanter Unterschied (P <0,05) zur Kontrollgruppe liegt vor* *CV: Durchschnittlicher Variationskoeffizient für aufgeführte Parameter* | | | | | |

Die oben dargestellten Versuchsergebnisse zeigen, dass der Extrakt der Dichroa Febrifuga in der Lage ist, Shrimp gesund zu halten, die Verlustrate deutlich zu senken, sowie den Zuwachs je Tier und den Zuwachs je Teich deutlich zu erhöhen.

Der standardisierte Extrakt der Dichroa Febrifuga als Futterzusatzstoff im Futter für Shrimp ist eine geeignete Maßnahme, um die Tiere gesund zu erhalten und das Entzündungsniveau und das Ausmaß der durch Viren verursachten Erkrankungen niedrig zu halten und so den Verbrauch an Antibiotika in der Shrimpzucht zu vermindern oder komplett darauf zu verzichten.

**Versuch 2:** Shrimp: P. Vannamei. Für diesen in Brasilien durchgeführten Versuch wurden 5 Replikationsteiche für Shrimp der Rasse P. Vannamei pro Versuchsgruppe (Febrifugin bzw. Kontrolle) verwendet. Jeder Replikationsteich war etwa 3 Hektar (30.000 m2) groß. In 5 "Kontrollteichen" wurde 107 Tage lang Standardfutter mit dem Antibiotikum Chloramphenicol verabreicht, in den 5 "Behandlungsteichen" dagegen für 111 Tage eine phytobiotische Ergänzung aus dem Extrakt der Dichroa Febrifuga.

Der zweite Versuch in Brasilien fand während unstabiler Wetterverhältnisse mit starkem tropischem Regen und großer Hitze statt. Die Wassertemperatur war sehr hoch, was bei Shrimps zu erheblichem Stress und Leistungsabfall bzw. Schwächung bis hin zum Tod führt. Die starken Regenfälle bewirkten eine Einwaschung von Schmutz und infektiösem Material (insbesondere das Infectious Myonecrosis Virus (IMNV)) in die Teiche. Neben dem IMNV wurden auch andere virale und bakterielle Erreger durch die Regenfälle eingetragen, insbesondere Erreger der NHP - Necrotising Hepatopankreatitis. Die Shrimppopulationen des zweiten Versuchs waren also starkem Hitzestress und hohem Infektionsdruck durch Bakterien und Viren ausgesetzt. Unter diesen Bedingungen kommt es häufig zu einem starken Rückgang der Wachstumsrate und zum Ausbruch von weiteren eingetragenen oder bereits latent vorhandenen Krankheiten wie etwa der White Spot Virus (WSSV) Erkrankung. Die untenstehenden Ergebnisse zeigen, dass febrifuginhaltiges Futter einen wirksameren Schutz vor hitze- und krankheitsbedingtem Stress darstellt als selbst das Antibiotikum Chloramphenicol. Es war in der Lage, erheblichen Verluste und Leistungseinbußen, die ohne Gabe entsprechender Mittel bei den gegebenen Verhältnissen zu erwarten gewesen wären, weitgehend zu verhindern.

| | **Kontrollfutter mit Antibiotika Chloramphenicol** | **Futter mit Extrakt der Dichroa Febrifuga** | **Leistungsunterschied** |
|---|---|---|---|
| **Teichfläche [Hektar]** | 15 ha | 15 ha | |
| **Versuchsdauer [Tage]** | 107 | 111 | |
| **Überlebensrate [%]** | 77 | 82 | +7% |
| **Endgewicht [g]** | 12,77 | 15,04 | +18% |
| **Ernte je Hektar [kg]** | 1771 | 2189 | + 24 % |
| **Futterverwertung** | 1,86 | 1,81 | -3 % |
| **Wachstum je Woche [g]** | 0,835 | 0,948 | +14% |
| **Produktionskosten [%]** | 100 | 91 | -10 % |
| **Wert der Ernte [%]** | 100 | 123 | +23% |

Dieser hier aufgeführte zweite Versuch zeigt, dass Febrifugin in physiologisch wirksamer Dosis, hier verabreicht als Extrakt der Dichroa Febrifuga, in der Lage ist, dieselben oder sogar verbesserte Gesundheits- und Wirtschaftlichkeitseffekte zu erzeugen, wie das derzeit eingesetzte Antibiotikum Chloramphenicol selbst wenn die Tiere erheblichem umweltbedingtem Stress ausgesetzt werden.

Die Zugabe des physiologisch wirksamen Extrakts der Dichroa Febrifuga zum Futter für Shrimp verbessert somit signifikant die Gesundheit der Tiere sowohl unter Praxis- als auch unter Laborbedingungen. Der Zuwachs und der Futteraufwand waren im ersten bzw. im zweiten Versuch im Vergleich zu den jeweils eingesetzten Antibiotika um 31 % bzw. 18 % verbessert. Dies ist auf die entzündungshemmende Wirkung des febrifuginhaltigen Extrakts der Dichroa Febrifuga zurückzuführen, die im Gegensatz zu den Antibiotika auch antivirale Wirkung zeigte.

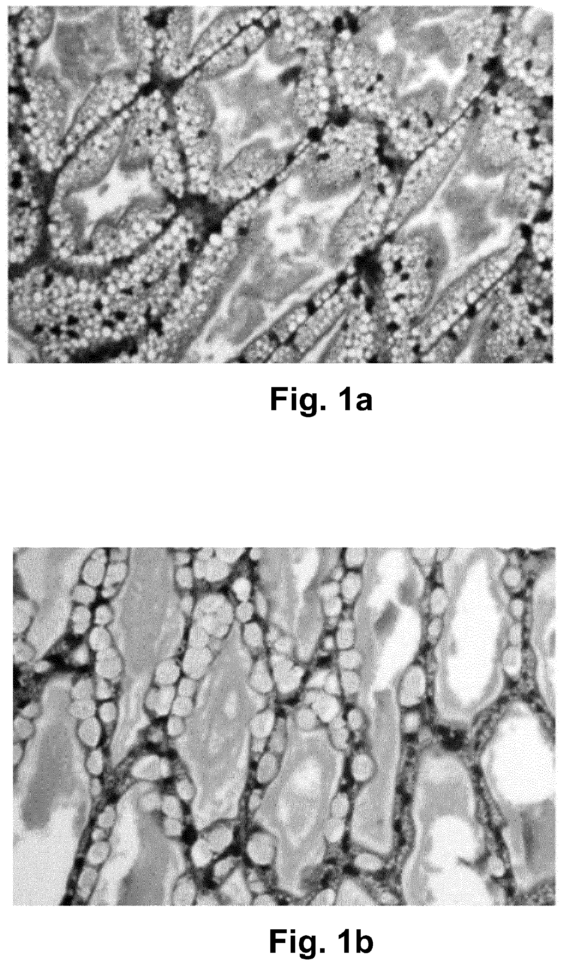

**Figuren 1a, 1b** zeigen histologische Schnitte und Ausmaß der Fett-Vakuolisierung der Hepatopankreas in Shrimp, Penaeus Indicus. Figur 1a zeigt einen histologischen Schnitt eines Shrimp aus dem Kontrollteich, welcher mit dem Antibiotikum Chloramphenicol behandelt wurde. Das Gewebe weist einen hohes Ausmaß an Fett - Vakuolisierung in Folge Hepatopankreatitis auf. Figur 1b zeigt einen histologischen Schnitt eines Shrimp aus dem zweiten Versuch, der mit febrifuginhaltigen Futter gefüttert wurde. Das Gewebe weist ein deutlich niedrigeres Ausmaß an Fett - Vakuolisierung auf als das in Figur 1a abgebildete Gewebe.

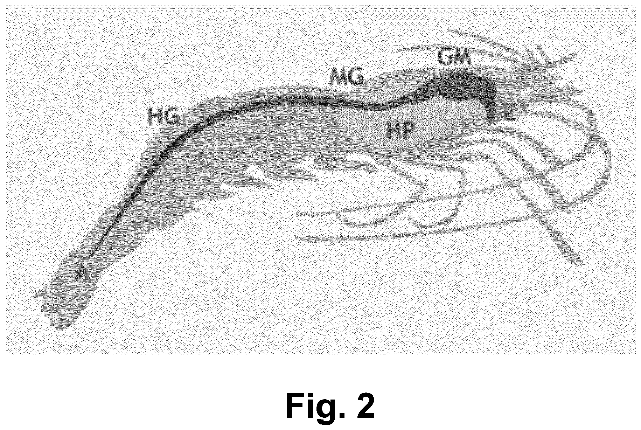

**Figur 2** zeigt ein Schema des Verdauungstrakts von Shrimps. Der Hepatopankreas (HP) ist das wesentliche Organ des Verdauungstraktes des Shrimp. Er verdaut die Nahrung und speichert die Nährstoffe. Des Weiteren werden gezeigt: Esophagus (E), "Magenmühle" (gastric mill - GM), mittlerer Verdauungstrakt (mid gut - MG), hinterer Verdauungstrakt (hind gut - HG), und Anus (A). Eine Pankreatitis (Entzündung des Hepatopankreas) hat erhebliche negative Auswirkungen auf die Verdauungsleistung des Tieres, auf dessen Wachstum und auf das Überleben.

### Versuch 3:

Dieser Versuch wurde mit dem schnell wachsenden und relativ einfach zu haltenden Nilbarsch (Oreochromis Niloticus, auch Nil - Tilapia) in Ägypten durchgeführt.

Der Versuch wurde im frühen Jungtierstadium der Fische begonnen und nach 8 Wochen Wachstum beendet. Das Jungtierstadium ist im Hinblick auf die Wirksamkeit leistungssteigernder Mittel besonders aussagekräftig, da in diesem Alter die höchste Sterblichkeit auftritt und das spezifische Wachstum, also die relative Zunahme je Tag im Vergleich zum aktuellen Körpergewicht, am höchsten ist. Zudem ist das Jungtierstadium auch das Stadium mit der höchsten Sterblichkeit. Unterschiede zwischen Produkten lassen sich in diesem Alter daher am besten erkennen.

In sechs 150 Liter Tanks wurde jeweils eine Barschpopulation von 32 Exemplaren der Spezies O. Niloticus (Nil Tilapia) gehalten und während der ersten 8 Lebenswochen mit einem Standardfutter gefüttert. Eine dieser Gruppen (Gruppe "Kontrolle") erhielt keine weiteren physiologisch wirksamen Substanzen.

Eine weitere dieser Gruppen erhielt als weiteren Futterbestandteil Betaglucan (Gruppe "Betaglucan"). Beta-Glucan ist ein gereinigter Extrakt aus Hefezellwänden der Saccharomyces Cerevisiae in 1,3/1,6 Beta-Glucan-Struktur und wird heute in nahezu allen Futtermitteln für Fische als Leistungssteigerer eingesetzt. Im Versuch wurde das Produkt MacroGard der Firma Biorigin eingesetzt, dem man die höchste Qualität unter den Beta Glucanen zusagt.

Eine dritte Gruppe erhielt zusätzlich Sanguinarin (Gruppe "Sanguinarin"). Sanguinarin ist ein Alkaloid aus der Gruppe der Isoquinolinalkaloide und wird aus der Sanguinaria Canadensis mittel Ethanol extrahiert. Es ist ein bewährtes entzündungshemmendes Heilmittel in der Vorbeuge und Heilung von Zahnfleischentzündungen. In der Dosis von 1 mg je kg Futter wird es auch als Futterzusatzstoff in Futter für Hühner und Schweine eingesetzt.

Den Barschen der drei übrigen Gruppen wurde Futter verabreicht, welches unterschiedliche Mengen eines febrifuginhaltigen Extrakts der Dichroa Febrifuga enthielt. Die "/kg" Angaben beziehen sich jeweils auf mg des Extraktes pro kg Futter. Bei dem febrifuginhaltigen Extrakt handelt es sich um einen Extrakt mit einem definierten Febrifugingehalt von 6,5% Febrifugin. Somit entsprechen 20 mg Extrakt/kg Futter einem Febrifugingehalt von 1,3 mg/kg Futter. 50mg Extrakt/kg Futter entsprechen einem Febrifugingehalt von 3,25 mg/kg Futter. 100 mg Extrakt/kg Futter entsprechen einem Febrifugingehalt von 6,5 mg/kg Futter.

| **Zusatz** | **Kontrolle** | **Betaglucan 2000 mg/kg** | **Sanguinarin 1 mg/kg** | **Febrifuginhaltiger Extrakt 20 mg/kg** | **Febrifuginhaltiger Extrakt 50 mg/kg** | **Febrifuginhaltiger Extrakt 100 mg/kg** |
|---|---|---|---|---|---|---|
| **Gewicht Tag 0 [g]** | 6,9 | 6,7 | 6,7 | 6,9 | 6,7 | 6,8 |
| **Gewicht Ende [g]** | 57,8 | 75,5* | 78,8* | 80,3* | 81,9* | 83,4* |
| **Zuwachs [g]** | 50,9 | 72,1* | 72,1* | 73,4* | 73,2* | 76,6* |
| **Condition factor K** | 1,42 | 1,69* | 2,11* | 2,15* | 2,15* | 2,18* |
| **Netto-Proteinnutzung** | 49,0 | 50,4 | 50,8 | 51,9 | 52 | 52,2 |
| **ProteinEffizienz** | 2,59 | 2,59 | 2,65 | 2,72 | 2,75 | 2,79 |
| **Spezifische Wachstumsrate [%]** | 3,0 | 3,5* | 3,5* | 3,7* | 3,8* | 3,8* |
| **Futterausnutzung** | 1,0 | 0,9 | 0,9 | 0,9 | 0,9 | 0,9 |

| | | | | | | |
|---|---|---|---|---|---|---|
| *: ein signifikanter Unterschied (P <0,05) zur Kontrollgruppe liegt vor Gewicht Tag 0: Gewicht der Fische zu Versuchsbeginn Gewicht Ende: Gewicht der Fische am Versuchsende 8 Wochen später Zuwachs: Zuwachs je Fisch im Versuchszeitraum Spezifische Wachstumsrate (Specific growth rate): (log(Endgewicht g) - log(Gewicht zu Beginn g)) / Tage Condition Faktor K: Indikator der Gesundheit und Leistungsfähigkeit. K = 100(W*L³) wobei W = nasses Gewicht des Fisches und L = Länge des Fisches in cm. K liegt typischerweise im Bereich von 0,8 bis 2,5, wobei Werte über 1,8 als exzellent gelten und Werte unter 1,2 als schlecht. Netto-Proteinnutzung (Net Protein utilisation): der Netto-Proteinansatz der Tiere in % zum aufgenommenen Futterprotein. Proteineffizienz (Protein efficiancy): Lebendgewichts Zunahme im Verhältnis zum verzehrten Protein Futterausnutzung: kg Futter je kg Zuwachs lebende Tiere | | | | | | |

Der "Versuch 3" zeigt, dass der febrifuginhaltige Extrakt aus der Dichroa Ferbifuga im Futter bei Nil - Tilapia zu signifikant verbesserten Leistungswerten führt, namentlich im Hinblick auf Endgewicht, Zuwachs, Condition factor, Proteineffizienz und spezifischen Wachstumsfaktor. Die Ergebnisse legen nahe, dass Febrifugin einen stärkeren leistungssteigernden Effekt hat als das Standardprodukt Beta-Glucan in der üblicherweise verwendeten Dosierung.

### Versuch 4:

Ergänzend zu "Versuch 3" wurde in einem "vierten Versuch" auch die Wirksamkeit von Febrifugin gegen haltungsbedingten Stress bei Fischen untersucht. Hierzu wurden vier 150 Liter Tanks jeweils mit einer Barschpopulation von 32 Exemplaren der Spezies O. Niloticus (Nil Tilapia) besetzt. Dies entspricht einem eher dünnen Besatz und damit "stressreduzierten" Haltungsbedingungen. Vier weitere Tanks der selben Größe wurden dagegen mit 150 Fischen je Tank besetzt, was dem vierfachen der üblichen Populationsdichte bei kommerzieller Zucht und damit Haltungsbedingungen unter hohem Stress entspricht. Die Fische der acht Tanks wurden während der ersten 8 Lebenswochen mit einem Standardfutter gefüttert, wobei - analog zum "dritten Versuch" - zwei Tanks für die "Kontrollgruppen" und zwei Tanks für die Fütterung mit unterschiedlichen Mengen an Febrifuginextrakt (Febrifugingehalt des Extrakts lag jeweils bei ca. 6,5 %) verwendet wurden und wobei einer der beiden Tanks jeweils die niedrige und einer die hohe Populationsdichte aufwies. Der vierte Versuch wurde ebenfalls im frühen Jungtierstadium der Fische begonnen und nach 60 Tagen Wachstum beendet. Die Febrifuginkonzentration des Futters entsprach den für den dritten Versuch beschriebenen Futtermischungen.

| **Produkt** | **Futterverzehr je Tag in g je Tier** | **Zuwachs in 60 Tagen in g je Tier** |
|---|---|---|
| **KN: Kontrolle (stressfrei)** | 1,3 g = 100 % | 60 g = 100 % |
| **KS: Kontrolle Stresssituation, relativ zu KN** | 85 %* | 81 %* |
| **Extrakt Dichroa Febrifuga 25mg Extrakt/kg + Stresssituation, relativ zu KS** | 108 %* | 111 %* |
| **Extrakt Dichroa Febrifuga 25mg Extrakt/kg + normale Situation relativ zu KN** | 121 %* | 122 %* |
| **Extrakt Dichroa Febrifuga 50mg Extrakt /kg + Stresssituation, relativ zu KS** | 129 %* | 135%* |
| **Extrakt Dichroa Febrifuga 50mg Extrakt /kg + normale Situation relativ zu KN** | 115 %* | 140 %* |
| **Extrakt Dichroa Febrifuga 100mg Extrakt /kg + Stresssituation, relativ zu KS** | 120 %* | 145 %* |
| **Extrakt Dichroa Febrifuga 100mg Extrakt /kg + normale Situation relativ zu KN** | 125 %* | 150%* |

| | | |
|---|---|---|
| Stresssituation: 150 Liter Tanks mit je 150 Fischen; entspricht einem vierfach höherer Besatz an Fischen je Liter Tank als bei üblicher Besetzung und erzeugt bei Fischen haltungsbedingten Stress Normale Situation: 150 Liter Tanks mit je 32 Fischen; repräsentiert normale bis stressreduzierte Umgebung im Vergleich zu kommerzieller Haltung | | |

Der Versuch zeigt, dass es in der Kontrollgruppe mit erhöhtem Besatz an Fischen je 150 Liter zu einer Leistungseinbuße durch erhöhten sozialen Stress kommt. Die Leistung sinkt um 15 % ab. Alle Dosierungen des febrifuginhaltigen Extraktes der Dichroa Febrifuga führen zu erhöhten Leistungswerten. Dichroa Febrifuga eingesetzt unter Stresssituation führt zu außerordentlich positiven Leistungswerten, die das Niveau der Kontrollgruppe unter stressenden Haltungsbedingungen deutlich übertreffen (um bis zum Doppelten was Zuwachs und Futterverzehr angeht). Die Ergebnisse waren sämtlich singifikant mit einem Signifikanzniveau von P <0,05.

Zudem wurden verschiedene Indikatoren der Lebergesundheit mit und ohne Verfütterung von Febrifugin ausgewertet.

| | **Kontrolle: Futter ohne Febrifugin** | **Futter mit Extrakt der Dichroa Febrifuga, 50 mg Extrakt /kg Futter (3,2 mg Febrifugin / kg Futter)** |
|---|---|---|
| **Hepatosomischer Index [%] (1)** | 1,6 | 1,9 |
| **Vicerasomatic Index % (2)** | 8,3 | 9 |
| **Liver Protein [mg/ml]** | 13,5 | 17,4 |
| **Alanin Amino Transferase activity (mIU/mg Protein) = ALAT** | 349 | 288 |

| | | |
|---|---|---|
| Hepatosomischer Index: Gewicht der Leber / Körpergewicht Viscerasomatioscher Index: Gewicht der Eingeweide im Verhältnis zum Körpergewicht ALAT: Leberspezifischer Index. Hohe Werte zeigen Leberbelastung, niedere Werte zeigen positive Gesundheit an. | | |

Der Versuch zeigt, dass mit Hilfe der Anwendung der febrifuginhaltigen Extrakte der Dichroa Febrifuga das Lebergewicht der Fische ansteigt. Dies zeigt was eine gute Leistungsfähigkeit des Tieres an. Das Gewicht des Verdauungstraktes nimmt durch Febrifugingabe ebenfalls zu. Dies ist positiv, da Nährstoffe besser verdaut werden können. Die Schädigung der Leber, gemessen in ALAT, ist unter Febrifugingabe reduziert, was wiederum auf eine positive Wirkung des Extraktes auf die Lebergesundheit, insbesondere auf eine protektive Wirkung des Extraktes gegen Leberschädigende Viren zurückzuführen ist.

Die oben beschriebenen Versuche 3 und 4 für den Nilbarsch wurden ergänzend auch an europäischen Welsen (*Silurus glanis*) durchgeführt. Die beim Nilbarsch gemessenen leistungssteigernden Effekte der untersuchten Substanzen wurden auch bei den Welsen beobachtet. Auch hier zeigte Febrifugin die stärkste leistungssteigernde Wirkung.

Die Versuche 1-4 zeigen, dass Febrifugin in der Anwendung bei Shrimp und im Fischfutter eine unerwartete positive Wirkung auf die Leistungsfähigkeit der Tiere hat. Dies zeigt sich insbesondere unter Stressbedingungen und in klassischen Mastbetrieben mit hohem Infektionsdruck durch verschiedenste virale Erreger bei beiden Tierspezies der Aquakultur. Überraschenderweise hat Febrifugin also nicht nur die bekannte, malariahemmende Wirkung beim Menschen (Fische und Krebstiere erkranken nicht an Malaria), sondern auch eine antivirale und stressmindernde Wirkung bei Fischen und Krebstieren. Dass Viren der Hauoptverursacher von entzündlichen Darmerkrankungen und vielen anderen ökonomisch höchst relevanten Krankheiten bei Fischen und Krebstieren sind, ist der Fachwelt bekannt. Die virenbedingten Schäden an Pankreas, Leber und anderen Organen des Verdauungstrakts sind als solches z.B. auch in histologischen Gewebeschnitten (Größe, Form und Farbe von Fettvakuolen und anderer Gewebebestandteile) erkennbar.

Bezüglich der oben geschilderten Freilandversuche ist anzumerken, dass auch eine Verbesserung des Verdauungs- und Leistungsniveaus um nur um wenige Prozente von erheblicher wirtschaftlicher Bedeutung darstellt: viele Aquakulturen sind Großanlagen, in welchen auch schon kleine Leistungssteigerungen eine erhebliche Verbesserung der Wirtschaftlichkeit eines Betriebes bedingen können.

### Versuch 5:

Neben den Freilandversuchen wurde der entzündungshemmende Effekt von Febrifugin auch im Labor mittels Zellkulturexperimenten mit Makrophagen vom Darmtrakt von Fischen untersucht. In dem Test wurde die Entstehung von Stickstoffoxid in Makrophagen als Marker des Entzündungsgrades im Körper angesehen, wozu die gewonnenen Makrophagen aus Tieren, die zuvor einen Zusatzstoff erhalten hatten oder im Falle der Kontrolltiere keinen Zusatzstoff erhalten hatten, mit Hilfe der Stimulierung der Immunantwort durch LPS (Lippopolisaccharid indizierte Entzündungsreaktion) eine verringerte oder erhöhte Entzündungsreaktion zeigen, die dann anhand des entstehenden Stickstoffmonoxid gemessen werden kann. Bei Infektionen bzw. auch bei entsprechender "Aktivierung" durch LPS bilden Makrophagen dichte Wolken des aggressiven Sückstoffmonoxids als "Kampfgas" gegen Bakterien und Pilze. Nicht nur die Säugetiere, sondern auch Vögel, Fische, Frösche und sogar Krebse - die sich schon vor 500 Millionen Jahren von der Entwicklungslinie der Wirbeltiere getrennt haben - nutzen NO zur Regulation ihrer Körperfunktionen und als Abwehrstoff. Die Ursprünge der "NO-Synthase", das Enzym, mit dessen Hilfe das Gas in den Körperzellen erzeugt wird, reichen 3,5 Milliarden Jahre und damit bis an den Ursprung des Lebens auf der Erde zurück. Ein hoher Wert an Stickstoffmonoxid entspricht einem hohen Entzündungsniveau in den Zellen, ein niederer Wert entspricht einem verminderten Niveau an Entzündungsgeschehen. Im Zuge des Tests wurden Makrophagen zunächst Substanzen ausgesetzt, die Entzündungsreaktionen hervorrufen, z.B. das LPS, welches sehr standardisiert eingesetzt werden kann.

Die untenstehende Tabelle zeigt die gemessene Menge an Stickstoffmonoxid (NO in µMol/ml) die in der Makrophagen-Nährlösung nach Stimulierung entzündlicher Vorgänge und nach Zugabe verschiedener Substanzen gemessen wurden. Neben dem Febrifugin wurden des Weiteren die bekannten entzündungshemmenden Substanzen Aspirin (Acetylsalicylsäure), Oxytetrazyklin, Sanguinarin und Chelerythrin eingesetzt.

**Tabelle: Vergleich der Bildung von Stickstoffmonoxid NO in µMol/ml in Nährlösung nach LPS Stimulierung und Zugabe verschiedener Dosierungen mehrerer Substanzen.**

| **µg Produkt/g Nährlsg.** | **0,1** | **1,0** | **10** | **100** | **1000** |
|---|---|---|---|---|---|
| Acetylsalicylsäure | 40 | 40 | 40 | 40 | 5 |
| Oxytetracyclin | 40 | 40 | 40 | 40 | 5 |
| Sanguinarin | 40 | 35 | 5 | 0 | 0 |
| Chelerythrin | 40 | 40 | 10 | 0 | 0 |
| Febrifugin (Extrakt Dichroa Febrifuga) | 40 | 35 | 5 | 0 | 0 |

Febrifugin erwies sich im Makrophagentest in der Verminderung der Stickstoffmonoxid-Produktion dem bekannten Entzündungshemmstoff Acetylsalicylsäure und dem Oxitetrazyklin überlegen und konnte bereits in einer Dosierung von nur 10 µg je g Nährlösung dieselben niedrigen Werte an Stickstoffmonoxid erzeugen wie das Oxitetrazyklin bei 100 fach höherer Dosierung von 1000 µg je g. Die Wirkung von Febrifugin hatte den gleichen entzündungshemmenden Effekt wie Sanguinarin, das bei Säugetieren erfolgreich zur Vorbeuge von Entzündungen, z.B. als Zusatz in medizinischer Zahncreme zur Vorbeuge der Gingivitis (Zahnfleischentzündung), eingesetzt wird.

Der Versuch zeigt, dass Febrifugin in Makrophagen die Bildung von Stickstoffmonoxid, einem Entzündungsmarker, reduziert bis komplett hemmt. Das in einem Extrakt der Dichroa Febrifuga enthaltene Febrifugin schützt also die Gesundheit von Fischen und Kerbtieren, indem es Entzündungen vorbeugt bzw. diese reduziert. Dieser Befund ist überraschend, da Entzündungen einerseits und Malaria andererseits unterschiedliche Stoffwechsel- und Signalwege betreffen und die Wirksamkeit von Febrifugin gegen Malaria daher keinen Anlass bietet, auch einen entzündungshemmenden Effekt anzunehmen.

Die Prophylaxe bzw. Bekämpfung von Entzündungsvorgängen bewirkt eine bessere Allgemeingesundheit, höhere Leistung (Wachstumsrate, Proteineffizienz, Überlebensrate, etc.) und einen verbesserten Schutz gegen Bakterien, Viren, Parasiten und verschiedenste Stressoren während der Zucht wie z.B. dichter Besatz oder Hitze.

Es wurde überraschend festgestellt, dass die aus der Malaria Prophylaxe, als Hemmstoff gegen bakterielle Protozoa Erreger, bekannte Substanz des standardisierten Extraktes der Dichroa Febrifuga überraschender Weise ein wirksamer antiviraler Hemmstoff ist, im Fall von Stress positive Wirkung gegen stressbedingte Leistungsdepressionen zeigt und unerwartet positive Wirkungen als ein entzündungshemmender Stoff aufweist und somit ein neuartiger Leistungsförderer für Fische und Shrimp ist, der die derzeitige Verwendung von Antibiotika zur Leistungsabsicherung leistungsgleich ersetzen kann ohne bei Bakterien im Tier oder bei im Wasser lebenden Keimen, besonders bei denen zur Klasse der Enterokokken gehörenden MRSA, zur Selektion multiresistenter Erregerformen zu führen.

## Patentansprüche

1. Tiernahrung oder Tiernahrungsergänzungsmittel als Leistungsförderer für Fische und Krebstiere, das Febrifugin oder ein Febrifuginderivat enthält.

2. Tiernahrung oder Tiernahrungsergänzungsmittel nach Anspruch 1 zur Vorbeugung und Behandlung von mikrobiell- und/oder nicht-mikrobiell induzierten Entzündungen der Verdauungsorgane.

3. Tiernahrung oder Tiernahrungsergänzungsmittel nach Anspruch 1 oder 2 zur Vorbeugung und Behandlung von virus-induzierten Entzündungen der Verdauungsorgane.

4. Tiernahrung oder Tiernahrungsergänzungsmittel nach Anspruch 1 oder 2 zur Vorbeugung und Behandlung von Leistungsminderung durch Stress.

5. Tiernahrung oder Tiernahrungsergänzungsmittel nach einem der vorigen Ansprüche, welches Pflanzenmaterial der Dichroa febrifuga oder eines Extraktes daraus, enthält, wobei das Febrifugin oder dessen Derivat Bestandteil des Pflanzenmaterials ist.

6. Tiernahrung oder Tiernahrungsergänzungsmittel nach einem der vorigen Ansprüche, wobei die Tiernahrung oder das Tiernahrungsergänzungsmittel zumindest ein Isochinolinalkaloid oder dessen Derivat beinhaltet.

7. Tiernahrung oder Tiernahrungsergänzungsmittel nach Anspruch 6, wobei das zumindest eine Isochinolinalkaloid ein Benzophenanthridinalkaloid ist, vorzugsweise ausgewählt aus der Gruppe bestehend aus Sanguinarin und/oder Chelerythrin und deren Salzen.

8. Die Tiernahrung nach einem der vorigen Ansprüche, wobei das Febrifugin in der Tiernahrung in einer Konzentration von über 50 µg Febrifugin/kg Tiernahrung vorliegt.

9. Die Tiernahrung nach Anspruch 8, wobei das Febrifugin in der Tiernahrung in einer Konzentration von 100 µg -17 mg/kg Tiernahrung, insbesondere im Bereich von 1-10 mg/kg Tiernahrung, vorzugsweise im Bereich von 1-4 mg/kg Tiernahrung vorliegt.

10. Die Tiernahrung nach einem der vorigen Ansprüche, wobei die Tiernahrung minestens 20%, vorzugsweise mindestens 30% Mais oder Maismehl beinhaltet.

11. Das Tiernahrungsergänzungsmittel nach einem der Ansprüche 1-7, wobei das Tiernahrungsergänzungsmittel eine Vormischung oder ein Konzentrat zur Erzeugung der Tiernahrung nach einem der Ansprüche 8-10 ist.

12. Febrifugin, Febrifuginderivat oder febrifuginhaltiges Pflanzenextrakt zur Herstellung einer Tiernahrung oder Tiernahrungsergänzungsmittel als Leistungsförderer für Fische und/oder Krebstiere nach einem der Ansprüche 1-11.

13. Verfahren zur Leistungsförderung bei Fischen und Krebstieren, **dadurch gekennzeichnet, dass** den Fischen und Krebstieren Tiernahrung nach einem der vorigen Ansprüche 1-10 bereitgestellt wird.

14. Verfahren zur Leistungsförderung bei Fischen und Krebstieren nach Anspruch 13, wobei die Leistungssteigerung durch Vorbeugung und Behandlung von mikrobiell- und/oder nicht-mikrobiell induzierten Darmentzündungen, insbesondere von virusbedingten Darmentzündungen, bewirkt wird.

15. Verfahren zur Leistungsförderung bei Fischen und Krebstieren nach Anspruch 13, wobei die Leistungssteigerung durch Vorbeugung und Behandlung von Stress bewirkt wird.

16. Verfahren nach einem der Ansprüche 13-15, wobei die bereitgestellte Menge an Febrifugin oder Febrifuginderivat zwischen 10 µg und 3000 µg, bevorzugt zwischen 20 µg und 500 µg pro kg Lebendgewicht Fisch oder Krebstier pro Tag liegt.

17. Verfahren nach einem der Ansprüche 13-16, wobei die verabreichte Menge an dem zumindest einen Isochinolinalkaloid über 1µg pro kg Lebendgewicht Fisch oder Krebstier pro Tag liegt, und vorzugsweise im Bereich von 10 µg - 200 µg pro kg Lebendgewicht pro Tag liegt.

## Geänderte Patentansprüche

### Geänderte Patentansprüche gemäss Regel 137(2) EPÜ.

1. Tiernahrung oder Tiernahrungsergänzungsmittel als Leistungsförderer für Fische und Krebstiere, das Febrifugin oder ein Febrifuginderivat enthält, wobei die Tiernahrung mindestens 20%, vorzugsweise mindestens 30% Mais oder Maismehl beinhaltet.

2. Tiernahrung oder Tiernahrungsergänzungsmittel nach Anspruch 1 zur Vorbeugung und Behandlung von mikrobiell- und/oder nicht-mikrobiell induzierten Entzündungen der Verdauungsorgane.

3. Tiernahrung oder Tiernahrungsergänzungsmittel nach Anspruch 1 oder 2 zur Vorbeugung und Behandlung von virus-induzierten Entzündungen der Verdauungsorgane.

4. Tiernahrung oder Tiernahrungsergänzungsmittel nach Anspruch 1 oder 2 zur Vorbeugung und Behandlung von Leistungsminderung durch Stress.

5. Tiernahrung oder Tiernahrungsergänzungsmittel nach einem der vorigen Ansprüche, welches Pflanzenmaterial der Dichroa febrifuga oder eines Extraktes daraus, enthält, wobei das Febrifugin oder dessen Derivat Bestandteil des Pflanzenmaterials ist.

6. Tiernahrung oder Tiernahrungsergänzungsmittel nach einem der vorigen Ansprüche, wobei die Tiernahrung oder das Tiernahrungsergänzungsmittel zumindest ein Isochinolinalkaloid oder dessen Derivat beinhaltet.

7. Tiernahrung oder Tiernahrungsergänzungsmittel nach Anspruch 6, wobei das zumindest eine Isochinolinalkaloid ein Benzophenanthridinalkaloid ist, vorzugsweise ausgewählt aus der Gruppe bestehend aus Sanguinarin und/oder Chelerythrin und deren Salzen.

8. Die Tiernahrung nach einem der vorigen Ansprüche, wobei das Febrifugin in der Tiernahrung in einer Konzentration von über 50 µg Febrifugin/kg Tiernahrung vorliegt.

9. Die Tiernahrung nach Anspruch 8, wobei das Febrifugin in der Tiernahrung in einer Konzentration von 100 µg -17 mg/kg Tiernahrung, insbesondere im Bereich von 1-10 mg/kg Tiernahrung, vorzugsweise im Bereich von 1-4 mg/kg Tiernahrung vorliegt.

10. Das Tiernahrungsergänzungsmittel nach einem der Ansprüche 1-6, wobei das Tiernahrungsergänzungsmittel eine Vormischung oder ein Konzentrat zur Erzeugung der Tiernahrung nach einem der Ansprüche 7-9 ist.

11. Febrifugin, Febrifuginderivat oder febrifuginhaltiger Pflanzenextrakt zur Herstellung einer Tiernahrung oder Tiernahrungsergänzungsmittel als Leistungsförderer für Fische und/oder Krebstiere nach einem der Ansprüche 1-10.

12. Verfahren zur Leistungsförderung bei Fischen und Krebstieren, **dadurch gekennzeichnet, dass** den Fischen und Krebstieren Tiernahrung nach einem der vorigen Ansprüche 1-9 bereitgestellt wird.

13. Verfahren zur Leistungsförderung bei Fischen und Krebstieren nach Anspruch 12, wobei die Leistungssteigerung durch Vorbeugung und Behandlung von mikrobiell- und/oder nicht-mikrobiell induzierten Darmentzündungen, insbesondere von virusbedingten Darmentzündungen, bewirkt wird.

14. Verfahren zur Leistungsförderung bei Fischen und Krebstieren nach Anspruch 12, wobei die Leistungssteigerung durch Vorbeugung und Behandlung von Stress bewirkt wird.

15. Verfahren nach einem der Ansprüche 12-14, wobei die bereitgestellte Menge an Febrifugin oder Febrifuginderivat zwischen 10 µg und 3000 µg, bevorzugt zwischen 20 µg und 500 µg pro kg Lebendgewicht Fisch oder Krebstier pro Tag liegt.

16. Verfahren nach einem der Ansprüche 12-15, wobei die verabreichte Menge an dem zumindest einen Isochinolinalkaloid über 1 µg pro kg Lebendgewicht Fisch oder Krebstier pro Tag liegt, und vorzugsweise im Bereich von 10 µg - 200 µg pro kg Lebendgewicht pro Tag liegt.
